# EUROPÄISCHE PATENTSCHRIFT

(11) **EP 2 114 645 B1**
(45) Veröffentlichungstag und Bekanntmachung des Hinweises auf die Patenterteilung: **08.06.2011**
(21) Anmeldenummer: 08707524.8
(22) Anmeldetag: 03.02.2008
(51) Int. Cl.: B27N 1/00, B27N 3/00, C08J 9/00, C08J 9/228

(54) **GRUNDWERKSTOFF, DESSEN HERSTELLUNGSVERFAHREN SOWIE VERWENDUNG**
BASE MATERIAL, METHOD OF PRODUCTION AND USE THEREOF
MATÉRIAU DE BASE, SON PROCÉDÉ DE FABRICATION ET SON UTILISATION

(30) Priorität: 23.04.2007 DE 102007019416
(43) Veröffentlichungstag der Anmeldung: 11.11.2009
(73) Patentinhaber: Pfleiderer Holzwerkstoffe GmbH & Co. KG, 92318 Neumarkt (DE)
(72) Erfinder: VON WERDER, Hans-Kurt, 84494 Niedertaufkirchen (DE); NONNINGER, Kurt, 59469 Ense (DE)
(74) Vertreter: Säger, Manfred
(86) Internationale Anmeldenummer: PCT/EP2008/000847
(87) Internationale Veröffentlichungsnummer: WO 2008/128589

(56) Entgegenhaltungen:
- EP-A- 0 960 711
- WO-A-90/14935
- WO-A-02/088233
- WO-A-2005/044536
- US-A- 5 736 209
- US-A- 5 851 634

## Beschreibung

Die Erfindung betrifft je ein gattungsgemässes Verfahren zur Herstellung eines Grundwerkstoffes, diesen Grundwerkstoff sowie dessen Verwendung nach den Oberbegiffen der nebengeordneten Ansprüche, also nämlich ein Verfahren zur Herstellung eines vorzugsweise zerkleinertes, zellulose- und/oder lignozellulosehaltiges Material aufweisenden Grundwerkstoffes, einen zerkleinerten, zellulose- und/oder lignozellulosehaltiges Material aufweisenden Grundwerkstoff sowie dessen Verwendung.

Ausgangspunkt und Hintergrund der Erfindung ist die in den letzten Jahren dramatisch angestiegene und immer noch anhaltende Nachfrage nach Holz in allen Segmenten wie Waldholz, Sägemehl, Hackschnitzel, Sägespäne, Schwarten aber auch nach allen Formen von Recyclingholz, wie gebrauchte Kabeltrommeln, Konstruktionsholz in allen Formen wie Bretter, Balken, Dachstühle u.s.w.

Die wesentlichen Gründe für diese nachhaltige und andauernde Verknappung aller dieser Holzsortimente liegen in der zunehmenden energetischen Nutzung wegen immer teurer werdender Primärenergieträger (Kohle, Erdöl, Erdgas) zum Teil auch mit falschen politischen Signalen wie z.B. die Förderung von privaten Investitionen in Pelletheizungen dann auch in jahrelangem übertriebenen Einschlagquoten in staatlichen und privatem Waldbesitz, der so allmählich dazu führt, dass immer schwieriger zugängliche Baumbestände sowie auch zunehmend schwächere Stamm- und Astdurchmesser stofflich genutzt werden müssen, was alles zu immer mehr manueller Waldarbeit und damit zu höheren Lohnkostenanteilen führt. An dieser Grundsituation ändern auch Stürme wie unlängst "Kyrill" eigentlich gar nichts, weil nach einer kurzzeitigen Phase des Überflusses die anschliessende Mangelsituation nur noch gravierender zu Buche schlägt.

Vor diesem Hintergrund ist es wichtig, dass sich die Holzwerkstoffindustrie zunehmend andere Materialien sucht, für die gelten muss, dass sie auf Basis von Zellulose und/oder Lignozellulose sein müssen, also auf Basis von Holz in Form von Fasern, Spänen, holzartigen Reststoffen, basierend auf allen möglichen Baumarten, aber darüber hinaus auch auf ähnlich gelagerten Lignozelulosematerialien der pflanzlichen Zellwand, wie sie z.B. auch in Flachs, Hanf, Miscanthus, Stroh, Chinagras vorliegen.

Ausserdem besteht aus auf der Hand liegenden Gründen ein dringendes Bedürfnis, gerade schwere bekannte Holzwerkstoffplatten bei zumindest gleichen technischen Eigenschaften auch deutlich leichter zu machen.

Ziel der Erfindung ist es also, mit Bezug auf bekannte Grundwerkstoffe auf Basis von Zellulose und/oder Lignozellulose für Holzwerkstoffe leichtere Grundmaterialien mit zumindest gleichwertigen technischen Eigenschaften für die Holzwerkstoffindustrie bereitzustellen.

Diese Aufgabe wird bei einem gattungsgemässen Verfahren nach dem Oberbegriff der nebengeordneten Anspruche erfindungsgemäss durch deren kennzeichndende Merkmale, also bei dem Verfahren dadurch gelöst, dass das zellulose- und/oder lignozellulosehaltigen Material einen schaumbildenden Bestandteil aufweist, dass das Material homogen zu einem Gemisch bei hoher Temperatur und Überdruck innig gemischt wird, dass danach das Gemisch unter dessen Volumensvergrösserung bei abnehmendem Druck und abnehmender Temperatur -unter dessen Expansionaufgeschäumt wird, und bei einem gattungsgemässen Grundwerkstoff durch einen schaumbildenden Bestandteil des Grundwerkstoffs und durch eine darin zusammen, vorzugsweise mit einem Stoff homogen unter Durchtränkung des Materials verteilt aufgeschäumte und bspw. teilweise durch duromere Vernetzung ausgehärtete verfestigte Schaumstruktur, und schliesslich durch die Verwendung eines zerkleinertes, zellulose- und/oder lignozellulosehaltiges Material aufweisenden Grundwerkstoffes mit einen schaumbildenden Bestandteil des Grundwerkstoffs und mit einer darin zusammen, vorzugsweise mit einem Stoff homogen unter Durchtränkung des Materials verteilt aufgeschäumten und bspw. teilweise durch duromere Vernetzung ausgehärteten verfestigten Schaumstruktur für die Weiterverarbeitung zu End- oder Zwischenprodukten wie Holzwerkstoffe, z.B. Span-, Faserplatten und Oriented Strand Boards (OSB)

Mit dem erfindungsgemässen Verfahren wird also das den Schaumbildner aufweisende zellulose- und/oder lignozellulosehaltige Material mit dem Schaumbildner so intensiv unter Überdruck und deutlich über der Zimmertemperatur liegender hohe Temperatur zu einem homogenen Gemisch gemischt, dass es bei Abnahme von Druck und Temperatur unter schlagartiger Entspannung explosionsartig expandieren sowie sich verfestigen kann. Der schaumbildenden Bestandteil weist im Gegensatz zu dem Stand der Technik (DE 197 56 154 C1; WO 97/03794 A1; DE 196 04 575 A1; DE 199 63 096), der als Schaumbildner nicht nur CO₂ abspaltendes Zwei-Komponenten-Polyurethan oder PMDI verwendet sondern auch nicht einen Grundwerkstoff als solchen, vielmehr direkt ein Fertigprodukt zum Gegenstand hat, erfindungsgemäss je nach jahreszeitlicher Erhältlicheit als -zu Popcorn auspuffenden- Mais, -zu Puffreis auspuffenden- Reis, Gerste und dgl. sowie Mehle aus diesen Materialien als Hauptkomponente auf, die mit einer hinreichend stabilen, feinster geschlossenporiger Schaumstruktur versehen sind. Daneben können zusätzlich noch als zellulose- und/oder lignozellulosehaltiges Material pflanzliche Reststoffe wie diverse Sorten von Stroh, Stengel, Hülsen, Maiskolben, Zweige etc. eingesetzt werden, wodurch eine neue Klasse von Grundwerkstoffen in einem Rohdichtebereich von 40 bis 200, vorzugsweise 80 bis 120 kg/m³ bereitgestellt wird, die also leichter als gewachsenes Holz (50 bis 300 kg/m³), und zum anderen zugleich bessere Zug- und Druckfestigkeiten aufweisen, wobei durch anteilige Verwendung dieser vorzugsweise granulierten Grundwerkstoffen solche Holzwerkstoffe bereit stehen, die zumindest gleichwertige technologische Eigenschaften anstelle der bisherigen bekannten Holzfasern als Grundwerkstoff aufweisen und zudem bei bestehenden Anlagen eingesetzt werden können.

Zur Verbesserung der Festigkeit kann in weiterer Ausgestaltung der Erfindung dem zellulose- und/oder lignozellulosehaltigen Material ein Schaumfestiger dem Gemisch zugesetzt und dieses bei hoher Temperatur und Überdruck innig unter Bildung des Gemischs gemischt werden. Dieser Schaumfestiger kann überraschenderweise Tannin aufweisende zerkleinerte Rinde sein.

Stattdessen oder aber zusätzlich kann aber ein zumindest teilweise duromer vernetzt aushärtender Stoff als Schaumbildner verwendet werden, der homogen unter Durchtränkung des Materials dem Gemisch zugemischt wird. Der Schaumbildner, nämlich der zumindest teilweise duromer aushärtende Stoff weist Duoplaste, z.B. Harnstoff- (U), Melamin- (M), Phenol-(P), Kondensationsharze und/oder PMDI (Poly methan di phenyl di isocyanat) auf, wobei als Kondensationsharze Tanninharze oder Lignin-basierte Harze verwendet werden können. Da heute zunehmend auch moderne Kunstharze, ausgehend von Thermoplasten wie PP, PE, ABS, Polystyrol, PA, PMMA etc. entwickelt worden sind, die dann durch vernetzende Zusätze wie acrylate oder Isocyanate immer mehr auch duroplastischen Charakter aufweisen, sind auch viele dieser neuartigen Kunstharze als schaumbildender Stoff im Sinne der Erfindung geeignet. In diesen Fällen wird das Material im Inneren mit dem Stoff durchdrungen und damit bis in die feinsten inneren Strukturen, nämlich den pflanzlichen Fibrillen durchtränkt bzw. imprägniert. Danach wird das Gemisch unter dessen Volumensvergrösserung aufgeschäumt und schliesslich zu dem neuen, in etwa homogenen Grundwerkstoff ausgehärtet, wobei der schaumbildende, zumindest teilweise duromer vernetzt ausgehärtete Stoff nicht nur zugleich als Bindemittel zwischen den Teilchen des zellulose und/oder lignozellulosehaltigen Materials dient, sondern auch die innere Struktur in Form der Fibrillen in den Teilchen des Materials formstabilisierend verfestigt und in dieser Form, also gewissermassen von innen heraus stabilisiert, so dass die Teilchen des Grundwerkstoffs hinreichend druckstabil sind und infolgedessen von einer Presse zu einer Holzwerkstoffplatte gepresst werden können. Durch die beim Aufschäumen bewirkte Volumensvergrösserung wird dabei das spezifische Gewicht verkleinert. Zugleich ist wichtig, dass dabei eine zumindest teilweise duromer vernetzt ausgehärtete druckstabile -innere und äussere- Schaumstruktur ensteht, die infolgedessen auch formstabil und deshalb auch zur Weiterverarbeitung geeignet ist. Diese Schaumstrukturen enthalten zwischen 5 bis 80%, vorzugsweise 10 bis 40% Zellulose und/oder Lignozellulose in homogener gleichmässiger Verteilung, die dann die feste chemische Verbindung mit entweder gleichen anderen Teilchen aus dem Grundwerkstoff oder normalen Holzspänen oder -fasern mittels Brücken erbringen.

Mit Vorteil wird nach Lehre der Erfindung das nach dem zumindest teilweise duromer vernetzten Aushärten gebildete Gemisch des Grundwerkstoffes mittels Messerringzerspaner oder Schlagmühle zerkleinert. Dabei kann der Grundwerkstoff im Rohdichtebereich grundsätzlich beliebig eingestellt werden, je nach geplantem Anwendungsfall von ca 10 bis 30 kg/m³ Rohdichte für den Bereich von Dämm- und Vliesstoffe bis hin zu 500 bis 650 kg/m³ für den hochverdichteten Bereich der HDF (high density fibreboard mit Rohdichten von 700 bis 1100 kg/m³), vornehmlich jedoch im Bereich von 500 bis 750 kg/m³ für den Bereich der normalen Span- und Faserplatten. Mit Vorteil wird der Grundwerkstoff in eine Form, am besten in Form ähnlich zu der von normalen Spänen, Fasern und Strands gebracht, weil genau diese Formen optimimal für die zum grossen Teil hervorragenden Eigenschaften verschiedenster Klassen von Holzwerkstoffe beitragen. Ansonsten sind die zerkleinerten Teilchen des Grundwerkstoffes durch die Hohlräume in der Schaumstruktur auch saugfähig sowie benetzbar, also z.B. das "Wegschlagen von Leim" durch gezielte Dosierung von hydrophoben Additiven, z.B. auf Basis von Silikon, Paraffinen oder Wachs verringert oder gleichzeitig auch die Qellungseigenschaften verbessert werden können.

Besonders einfach und wirksam gestaltet sich das erfindungsgemässe Verfahren einstufig, wenn das Material und der Stoff kontinuierlich und unter Überdruck zu dem Gemisch gemischt und zu dem Grundwerkstoff aufgeschäumt werden, wobei das homogene Vermischen und Aushärten in einem Extruder oder ähnlichem Mischaggregat wie Zwangsmischer erfolgen kann.

Es ist aber auch möglich, dass nach dem homogenen Vermischen, Aufschäumen und Aushärten in einem ersten Verfahrensschritt die anschliessende Zerkleinerung, Beleimung und ggf. anteilige Zugabe in zu der zwecks Verpressung zu einer Platte getreuten Span-, Faser- bzw. Strandsmatte in einem zweiten Verfahrensschritt separat erfolgt. Wenngleich das einstufige Verfahren durch seine Einfachheit und Logik besticht (der schaumbildende Stoff wird dem Leim bzw. der Matte vor einer kontinuierlich arbeitenden Presse beigefügt und das Aufschäumen startet dann z.B. bei Erreichen einer bestimmten Temperatur in der Presse, wobei sich die Schaumstruktur in dem Grundwerkstoff ausbildet und sofort aushärtet, ist der zweistufige Prozess doch leichter und besser mit Hinblick auf die Eigenschaften des zerkleinerten Grundwerksstoffs steuerbar. Das separate Aufschäumen kann im einfachsten Falle ganz drucklos erfolgen, z.B. in einem vorgegebenen Raum oder als Austrag aus einem Mischer in Form eines Endlosstranges mit beliebigem Querschnitt.

Das Aufschäumen des Gemisches zu dem Grundwerkstoff kann mechanisch, physikalisch, thermisch, chemisch und/oder durch Strahlung induziert bewirkt werden. Bei dem mechanischen Aufschäumen des Gemischs zu dem Grundwerkstoff kann dies z.B. durch Scherkraftrührwerke bewirkt werden. Beim chemischen Aufschäumen des Gemisches zu dem Grundwerkstoff wird dies durch Zugabe von Säure und beim physikalischen Aufschäumen durch Zugabe von sich bei einer bestimmten Temperatur unter Gasbildung unter Aufschäumen zersetzenden Wirkstoffen eingeleitet.

Es sind auch Kombinationen davon möglich, wenn als Wirkstoffe vorzugsweise stark exotherm reagierende Phenolharze (PF) sowohl unter Gasbildung als auch unter Verdamfen des Wassers des Harzes unter der gleichzeitigen Bewirkung des Ausschäumens eingesetzt werden.

Erfindungsgemäss hergestellte Grundwerkstoffe aus stärkehaltigen, natürlichen Rohstoffen, wie Körnermais, Roggen, Weizen usw. zeichnen sich zwar durch ein sehr geringes Schüttgewicht und eine hervorragende Homogenität aus. Jedoch hat dieser ggf. zerkleinerte Grundwerkstoff eine relativ spröde und offene Materialbeschaffenheit. Er wird beim Pressen, z.B. einer Platte stark belastet, dass er zerplatzt und bspw. nicht mehr die Stützfunktion in der Mittelschicht der Platte übernehmen kann.

Es wird daher erfindungsgemäss ein Gerüstbildner dem Material als Verstärkung, z.B. in einer Menge von 0,1 bis 30, vorzugsweise 1 bis 20 Gew.% zugesetzt, welcher Gerüstbildner Fasermaterial wie Holzfasern aufweisen kann.

Eine zusätzliche chemische Verstärkung lässt sich in weitere Ausgestaltung der Erfindung erzielen, wenn dem mit dem Schaumbildner Stoff sowie dem Gerüstbildner versehenen Material zusätzlich ein Bindemittel wie UF-, MUF-, PF-, MUPF-Harz zugesetzt wird. Zweckmässigerweise wird dabei das Bindemittel dem Gemisch zugesetzt.

Um eine kontinierliche Herstellung des Grundwerkstoffes zu erzielen, erfolgt mit Vorteil das Mischen des Gemischs in einem Extruder zu einem Extrudat, wobei zur Erzielung eines einfachen Verfahrensschrittes das Bindemittel dem Gemisch in dem Extruder, zweckmässigerweise fest auf fest über eine Pumpe zugegeben wird.

In dem Extruder herrscht eine Temperatur von 110 bis 170 °C, vorzugsweise 120 bis 160 °C und ein Druck von 7 bis 15 bar, vorzugsweise 8 bis 13 bar. Durch diese Aufschlussbedingungen im Extruder kommt es zu einer Vernetzung des Bindemittels.

Zwar wird dem Gemisch Wasser zugesetzt, aber das zur Extrusion notwendiges Wasser sollte minimiert werden, um Quellungen zu begegnen, die zur Versprödung der Extrudate beitragen.

Weiterhin ist es anstelle der Zugabe des Gerüstbildners möglich, dass z. B. die ganze (Mais-) Pflanze extrudiert wird, um die deren -mechanischverstärkende Funktion zu erhalten.

Nach dem Austritt des Gemisches aus dem Extruder erfolgt ein sofortiges Verdampfen des darin enthaltenen Wassers. Dies hat eine sofortige Expansion des Gemisches zu dem Extrudat zur Folge, bei oder nach der das Bindemittel aushärtet und somit die Druckfestigkeit der Matrix erhöht. Der Effekt der Versteifung gehärteter duroplastischer Bindemittel wird besonders in mit Fasermaterial verstärkten Extrudaten erreicht.

Mit dem erfindungsgemässen Verfahren kann also auch ein neuer, bspw. zerkleinerter zellulose- und/oder lignozellulosehaltiges Material aufweisender Grundwerkstoff mit einem schaumbildenden Bestandteil des Grundwerkstoffs und durch eine darin zusammen, vorzugsweise mit einem Stoff homogen unter Durchtränkung des Materials verteilt aufgeschäumte und bspw. teilweise durch duromere Vernetzung ausgehärtete verfestigte Schaumstruktur erhalten werden. Der Grundwerkstoff weist eine gute Druckstabilität auf und gibt nicht unter Wärme und Druck (grösser 180 °C Temperatur bei 100% relativer Feuchte und 20 bis 35 bar Pressdruck) nach, bzw. fällt dabei nicht in sich zusammen. Idealerweise können so neuartige Span-, Faser- und Strandsortimente bereitgestellt werden, die normalen Holzspänen und Fasern und Strands ähneln, nur dass sie leichter sind und eine druck- und formstabile feste Schaumstruktur aufweisen.

Erfindungsgemäss wird der zerkleinerte, zellulose- und/oder lignozellulosehaltiges Material aufweisende Grundwerkstoff mit einen schaumbildenden Bestandteil des Grundwerkstoffs und mit einer darin zusammen, vorzugsweise mit einem Stoff homogen unter Durchtränkung des Materials verteilt aufgeschäumten und bspw. teilweise durch duromere Vernetzung ausgehärteten verfestigten Schaumstruktur für die Weiterverarbeitung zu End- oder Zwischenprodukten wie Holzwerkstoffe, z.B. Span-, Faserplatten und Oriented Strand Boards (OSB), vorzugsweise anteilig zu normalen Fasern, Spänen oder Strands aus Holz verwendet. Indem die Eigenschaften des zerkleinerten Grundwerkstoffs durch den Stoff in weiten Grenzen eingestellt werden können, sind auch mit den daraus erfindungsgemäss hergestellten Holzwerkstoffen auch Klimaeinflüsse, Unterschiede zwischen Sommer und Winter sowie Feuchtegehalten in weiten Bereichen beherrschbar.

Alle nachfolgend beschriebenen Beispiele gemäß der Erfindung wurden mit Extrudaten als Grundwerkstoff ausgeführt, welche folgendermaßen hergestellt wurden:

Zur Herstellung dieser Extrudate wurden das zellulose- und/oder lignozellulosehaltige Material, nachfolgend auch kurz Ausgangsmaterial wie Mais, Roggen etc meist in Form sog. Schrote (d.h. vorzerkleinert, aufgemahlen) und über eine gravimetrische Dosierung einem Doppelschneckenextruder zugeführt. Extruder sind Fördergeräte, die nach dem Funktionsprinzip der Archimedischen Schraube feste bis dickflüssige Massen unter hohem Druck und hoher Temperatur gleichmäßig aus einer formgebenden Öffnung herauspressen, welcher Vorgang als Extrusion bezeichnet wird. Das Ausgangsmaterial wurde einem Materialdruck von 130 bis 180 bar und einem Temperaturbereich von 150 bis 200 °C ausgesetzt und der so hergestellte Grundwerkstoff hatte nach Austritt aus dem Extruder einen Durchmesser von 4 bis 8 mm.

Beispiel 1: Es wird als zellulose- und/oder lignozellulosehaltiges Material Mais in Form von Mehl eingesetzt, das in NaOH-alkalischer Lösung bei pH 9 bis 10 in Wasser unter Zugabe von 10% Polyvinylalkohol aufgeschlämmt und einem auf 180 °C beheizten Extruder als sogenannte Imprägnierflotte zugeführt wird. Dieser wird PMDI als schaumbildender, zumindest teilweise duromer vernetzt aushärtender Stoff an geeigneter Stelle der Extruderschnecke zugesetzt, sodass einerseits noch genügend Schneckenvolumen für die homogene Durchmischung verbleibt, andererseits aber auch sichergestellt ist, dass die dann sofort einsetzende Aushärungsreaktionen am Ende der Extruderschnecke noch nicht vollständig abgeschlossen sind.

Am Austrag des Extruders wird das Gemisch -je nach Werkzeugausführung- infolge des Aufschäumvorganges nach der Druckentlastung in Form eines sich selbsttätig im Volumen vergrössernden Stranges oder bei Schlitzdüsenform als sogenannter Kuchen mit rechteckförmigem Querschnitt ausgetragen, wobei der neue Grundwerkstoff erhärtet.

Dieser wird nachfolgend mittels einer Hammermühle zu spanartigen Partikeln zerkleinert, danach zu Fraktionen gesiebt und einer gestreuten Matte aus normalen Spänen aus Holz anteilig mit einem Prozentsatz von 30% zugestreut und kontinuierlich zu einer Platte gepresst. Die Platte hatte dieselbe Zugsowie Biegefestigkeit wie eine nur aus normalen Spänen aus Holz hergestellte Vergleichsplatte; allerdings wog sie 15% weniger als diese.

Beispiel 2: Diese Beispiel betriftt die Herstellung von neuem Grundwerkstoff aus Roggen und dessen Weiterverarbeitung zu UF-Harz gebundenen, dreischichtigen Spanplatten mit geringer Rohdichte und mit 33% auf Roggen basierendem Extrudat in der Mittelschicht.

Die Herstellung der Extrudate erfolgte auf dem Extruder der FA. ERMAFA Typ DS-65. Es wurden 50 kg rieselfähiges Roggenschrot in einen Vorlagebehälter, welcher über der Maschine angeordnet ist, gefüllt und gravimetrisch und kontinuierlich über Dosierschnecken dem Extruder zugeführt. Die Dosierschnecke wird über einen Schrittmotor bewegt, welcher an eine Steuereinheit angeschlossen ist. Über die Steuerung der Dosierschneckenzahl lässt sich ein definiertes Volumen pro Zeiteinheit bestimmen. Der Durchsatz in diesem Versuch betrug 300 kg/h, die Temperatur 180 °C und der Forminnendruck 150 bar. Das Material wurde unter diesen extremen Bedingungen geschmolzen und über gegenläufige Schnecken zur Lochdüse transportiert, wo es anschließend mit Hilfe rotierender Messer auf eine Teilchengröße von 4 bis 8 mm geschnitten wird. Aus diesem auf Roggen basierenden Extrudat und zusätzlichen industriellen Mittelschicht- und Deckschichtspänen wurden 20 mm dicke dreischichtige Spanplatten mit einer Rohdichte von 590 kg/m³ hergestellt. Den Mittelschichtspänen wurden 33% Roggenextrudat beigemischt. Die Beleimung erfolgte mit einer industriellen standardisierten Bindemittelzusammensetzung. Als Bindemittel wurde ein Harnstoff-Formaldehyd-Kondensationsprodukt der Marke "Kaurit 350" mit einen Festoffgehalt von 68% verwendet. Als Härtungsbeschleuniger wurde eine 33%ige Ammoniumsulfat-Lösung und als Hydrophobierungsmittel ist "HydroWax 138" von der Firma Sasol GmbH eingesetzt worden. Die Paraffinemulsion hatte einen Feststoffgehalt von 50 %. Die Leimflotte der Mittelschicht bestand dabei aus 7 % UF-Festharz bezogen auf atro Span, 2% Härter fest bezogen auf Festharz und 0,5 % Hydrophobierungsmittel ebenfalls bezogen auf atro Span. Die Leimflotte der Deckschicht bestand dabei aus 11 % UF-Festharz bezogen auf atro Span, 0,5% Härter fest bezogen auf Festharz und 0,5 % Hydrophobierungsmittel bezogen auf atro Span. Der maschinengestreute Spankuchen wurde bei 195 °C für 9 s/mm und einem Druck von 220 bar verpresst.

Beispiel 3: Diese Beispiel betriftt die Herstellung von neuem Grundwerkstoff aus Maisgries und Holzfasern sowie dessen Weiterverarbeitung zu UF-Harz gebundenen, dreischichtigen Spanplatten mit geringer Rohdichte und mit 33% faserverstärktem auf Maisgries basierendem neuen Grundwerkstoff in der Mittelschicht.

Die Herstellung der Extrudate erfolgte auf dem Extruder der FA. ERMAFA Typ DS-65. Dabei wurden 50 kg rieselfähiges Maisschrot und 10 kg Lignocel-Holzfaser der Firma Rettenmeier in einen Pflugscharmischer der Fa. Lödige vermengt. Im horizontalen Mischbehälter rotiert eine horizontale Welle mit darauf versetzt angeordneten pflugscharähnlichen Mischwerkzeugen. Anzahl, Größe, Form, Anordnung und Umfangsgeschwindigkeit der Schaufeln sind derart auf die Geometrie des Mischbehälters abgestimmt, dass sie das Material in eine definierte, dreidimensionale Bewegung zwingen. Durch die Mischwerkzeuge wird das Material, der Fliehkraft entgegenwirkend, von der Trommelwand abgehoben und in den freien Mischerraum geschleudert. Dies so erzeugte mechanische wirbelbett bewirkt unter ständiger Erfassung der gesamten Mischgutmenge eine intensive Vermischung auch bei hohen Mischgutdurchsätzen bzw. kurzen Verweilzeiten. Die Komponenten des Gemischs werden dabei intensiv vermischt, selbst wenn die Stoffe hinsichtlich Mengenverhältnis, Schüttgewicht oder Korngröße extreme Differenzen aufweisen. Anschließend wurde dieses Gemisch wie im Beispiel 2 beschrieben weiter verarbeitet.

Aus diesem Extrudat und industriellem Mittelschicht- und Deckschichtspan wurden 20 mm dicke dreischichtige Spanplatten mit einer Rohdichte von 590 kg/m³ hergestellt wobei den Mittelschichtspänen 33 % faserverstärktes Roggenextrudat beigemischt worden sind. Die Beleimung erfolgte mit einer industriellen standardisierten Bindemittelzusammensetzung. Als Bindemittel wurde ein Harnstoff-Formaldehyd-Kondensationsprodukt der Marke "Kaurit 350" mit einen Festoffgehalt von 68 % und als Härtungsbeschleuniger eine 33%ige Ammoniumsulfat-Lösung verwendet. Als Hydrophobierungsmittel wurde "HydroWax 138" von der Firma Sasol GmbH eingesetzt. Die Paraffinemulsion hatte einen Feststoffgehalt von 50 %. Die Leimflotte der Mittelschicht bestand dabei aus 7 % UF-Festharz bezogen auf atro Span, 2% Härter fest bezogen auf Festharz und 0,5 % Hydrophobierungsmittel bezogen auf atro Span. Die Leimflotte der Deckschicht bestand dabei aus 11 % UF-Festharz bezogen auf atro Span, 0,5% Härter fest bezogen auf Festharz und 0,5 % Hydrophobierungsmittel bezogen auf atro Span. Der maschinengestreute Spankuchen wurde bei 195 °C für 9 s/mm und einem Druck von 220 bar verpresst.

Beispiel 4: Diese Beispiel betriftt die Herstellung von neuem Grundwerkstoff aus Maisgries und duromer härtendem Phenolharz sowie dessen Weiterverarbeitung zu UF-Harz-gebundenen, dreischichtigen Spanplatten mit geringer Rohdichte und mit 33 % auf Maisgries basierendem neuartigen Grundwerkstoff in der Mittelschicht.

Die Herstellung der Extrudate erfolgte auf dem Extruder der FA. ERMAFA Typ DS-65. Es wurden 50 kg rieselfähiges Maisschrot und 10 kg Lignocel-Holzfaser der Firma Rettenmeier und 75 g Tannin GT5 in einen Pflugscharmischer der Fa. Lödige vermengt. Die Weiterverarbeitung erfolgte wie im Beispiel 2 und 3, jedoch wurde in diesem Experiment Phenolharz während der Extrusion hinzu dosiert. Der Extruder besitzt vier Heizzonen, welche in der Temperatur separat gesteuert werden können. Das Phenolharz wurde mittels einer Dosierpumpe über einen Rohranschluss vor der ersten Heizzone dem Gemsich zugeführt. Es ist vorstellbar, dass die Dosierung von flüssigen Additiven auch an einer anderen Stelle des Extruders erfolgen kann, um einen gewünschten Effekt zu erzielen.

Aus diesem Extrudat und industriellen Mittelschicht- und Deckschichtspan wurden 20 mm dicke dreischichtige Spanplatten mit einer Rohdichte von 590 kg/m³ hergestellt. Den Mittelschichtspänen wurden 33 % faserverstärktes Roggenextrudat beigemischt. Die Beleimung erfolgte mit einer industriellen standardisierten Bindemittelzusammensetzung. Als Bindemittel wurde ein Harnstoff-Formaldehyd-Kondensationsprodukt der Marke "Kaurit 350" mit einen Festoffgehalt von 68 % verwendet. Als Härtungsbeschleuniger wurde eine 33%ige Ammoniumsulfat-Lösung und als Hydrophobierungsmittel wurde "HydroWax 138" von der Firma Sasol GmbH eingesetzt. Die Paraffinemulsion hatte einen Feststoffgehalt von 50%. Die Leimflotte der Mittelschicht bestand dabei aus 7 % UF-Festharz bezogen auf atro Span, 2% Härter fest bezogen auf Festharz und 0,5 % Hydrophobierungsmittel bezogen auf atro Span. Die Leimflotte der Deckschicht wies dabei 11 % UF-Festharz bezogen auf atro Span, 0,5 % Härter fest bezogen auf Festharz und 0,5 % Hydrophobierungsmittel bezogen auf atro Span auf. Der maschinengestreute Spankuchen wurde bei 195 °C für 9 s/mm und einem Druck von 220 bar verpresst.

Beispiel 5: Dieses betrifft die Herstellung von neuem Grundwerkstoff aus Maisgries und duromer härtendem Harnstoffharz sowie dessen Weiterverarbeitung zu UF-Harz gebundenen, dreischichtigen Spanplatten mit geringer Rohdichte und mit 33% auf Maisgries basierendem neuen Grundwerkstoff in der Mittelschicht.

Die Herstellung der Extrudate erfolgte auf dem Extruder der FA. ERMAFA Typ DS-65. Es wurden 50 kg rieselfähiges Maisschrot und 10 kg Lignocel -Holzfaser der Firma Rettenmeier in einen Pflugscharmischer der Fa. Lödige vermengt. Die Weiterverarbeitung erfolgte wie im Beispiel 4, jedoch wurde in diesem Beispiel ein Harnstoff-Formaldehyd-Kondensationsprodukt der Marke Dynea, und 33%ige Ammoniumsulfat-Lösung vor der ersten Heizzone hinzu dosiert.

Aus diesem Extrudat und industriellem Mittelschicht- und Deckschichtspan wurden 20 mm dicke dreischichtige Spanplatten mit einer Rohdichte von 590 kg/m³ hergestellt. Den Mittelschichtspänen wurden 33% faserverstärktes Roggenextrudat beigemischt. Die Beleimung erfolgte mit einer industriellen standardisierten Bindemittelzusammensetzung. Als Bindemittel wurde ein Harnstoff-Formaldehyd-Kondensationsprodukt der Marke "Kaurit 350" mit einen Festoffgehalt von 68 % verwendet und als Härtungsbeschleuniger eine 33%ige Ammoniumsulfat-Lösung verwendet. Als Hydrophobierungsmittel wurde "HydroWax 138" von der Firma Sasol GmbH eingesetzt. Die Paraffinemulsion hatte einen Feststoffgehalt von 50 %. Die Leimflotte der Mittelschicht bestand dabei aus 7 % UF-Festharz bezogen auf atro Span, 2 % Härter fest bezogen auf Festharz und 0,5 % Hydrophobierungsmittel bezogen auf atro Span. Die Leimflotte der Deckschicht bestand dabei aus 11 % UF-Festharz bezogen auf atro Span, 0,5% Härter fest bezogen auf Festharz und 0,5 % Hydrophobierungsmittel bezogen auf atro Span. Der maschinengestreute Spankuchen wurde bei 195 °C für 9 s/mm und einem Druck von 220 bar verpresst.

Beispiel 6: Dieses betrifft die Herstellung von UF-Harz gebundenen, dreischichtigen Spanplatten mit geringer Rohdichte aus Industriespan als Referenz.

Die Leimflottte entsprach in ihrer Zusammensetzung und Menge wie in Beispiel 2 und 3 beschrieben. Auch alle weiteren Herstellungsparameter sind mit dem Beispiel 2 und 3 völlig identisch. Die Werte der mechanisch-technologischen Eigenschaften bei den Beispiele, nämlich die Rohdichte(=1) in kg/m³, der Querzugfestigkeit(=2) in N/mm², der Biegefestigkeit (=3) in N/mm², der Abhebefestigkeit(=4) in N/mm², der Quellung nach 2 h(=5) in % und der Quellung nach 24 h(=6) in % sind in Tabelle 1 dargestellt.

| Bsp. | (1) | (2) | (3) | (4) | (5) | (6) |
|---|---|---|---|---|---|---|
| 2 | 590 | 0,42 | 10,18 | 0,93 | 4,2 | 16 |
| 3 | 590 | 0,4 | 10,98 | 1,14 | 2,7 | 12 |
| 4 | 632 | 0,36 | 11,17 | 1,27 | 3,1 | 16 |
| 5 | 617 | 0,29 | 11,43 | 1,18 | 4,2 | 23 |
| 6 | 590 | 0,53 | 12,81 | 1,20 | 4,2 | 12 |

## Patentansprüche

1. Verfahren zur Herstellung eines vorzugsweise zerkleinertes, zellulose- und/oder lignozellulosehaltiges Material aufweisenden Grundwerkstoffes, wobei das zellulose- und/oder lignozellulose- haltigen Material einen schaumbildenden Bestandteil aufweist, wobei das Material homogen zu einem Gemisch bei hoher Temperatur und Überdruck innig gemischt wird, wobei danach das Gemisch unter dessen Volumensvergrösserung bei abnehmendem Druck und abnehmender Temperatur aufgeschäumt wird und wobei sich schliesslich das aufgeschäumte Gemisch zu dem Grundwerkstoff verfestigt, **dadurch gekennzeichnet,**
- **dass** dem zellulose- und/oder lignozellulosehaltigen Material ein Schaumfestiger zugesetzt und bei hoher Temperatur und Überdruck innig unter Bildung des Gemischs gemischt wird,
- **dass** als Schaumfestiger ein zumindest teilweise duromer vernetzt aushärtender Stoff verwendet und dieser homogen unter Durchtränkung des Materials zu dem Gemisch gemischt wird,
- **dass** schliesslich das unter seiner Volumensvergrösserung aufgeschäumte Gemisch zumindest teilweise duromer vernetzt zu dem Grundwerkstoff aushärtend verfestigt
- und **dass** der nach dem zumindest teilweise duromer vernetzten Aushärten gebildete Grundwerkstoff durch Granulieren zerkleinert wird.

2. Verfahren nach Anspruch 1, **dadurch gekennzeichnet, dass** der schaumbildenden Bestandteil als -zu Popcorn auspuffender- Mais, -zu Puffreis auspuffender- Reis, Gerste; Weizen und dgl. stärkehaltige Cerealien sowie Mehle aus diesen Materialien ausgebildet ist.

3. Verfahren nach Anspruch 1, **dadurch gekennzeichnet, dass** der Schaumfestiger Tannin und/oder Lignin aufweist.

4. Verfahren nach Anspruch 3, **dadurch gekennzeichnet, dass** als Tannin aufweisender Schaumfestiger zerkleinerte Rinde verwendet wird.

5. Verfahren nach einem der vorhergehenden Ansprüche, **dadurch gekennzeichnet, dass** das Material und der Stoff kontinuierlich unter dem Überdruck, der über dem atmosphärische Druck liegt, zu dem Gemisch gemischt und zu dem Grundwerkstoff aufgeschäumt werden.

6. Verfahren nach einem der vorangegangenen Ansprüche, **dadurch gekennzeichnet, dass** der schaumbildende, zumindest teilweise duromer aushärtende Stoff Harnstoff- (U), Melamin- (M), Phenol- (P), Kondensationsharze und/oder PMDI (Poly methan di phenyl di isocyanat) aufweist.

7. Verfahren nach Anspruch 6, **dadurch gekennzeichnet, dass** als Kondensationsharze Tanninharze oder Lignin-basierte Harze verwendet werden.

8. Verfahren nach einem der vorangegangenen Ansprüche, **dadurch gekennzeichnet, dass** der schaumbildende Stoff Thermoplaste mit duromer vernetzend aushärtenden Zusätze aufweist.

9. verfahren nach Anspruch 8, **dadurch gekennzeichnet, dass** als Zusätze Acrylate und/oder Isocyanate verwendet werden.

10. Verfahren nach einem der vorangegangenen Ansprüche, **dadurch gekennzeichnet, dass** das Aufschäumen des Gemisches zu dem Grundwerkstoff mechanisch, physikalisch, thermisch, chemisch und/oder durch Strahlung induziert bewirkt wird.

11. Verfahren nach einem der vorangegangenen Ansprüche, **dadurch gekennzeichnet, dass** das mechanische Aufschäumen des Gemischs zu dem Grundwerkstoff durch Rührwerke, insbesondere Scherkraftrührwerke bewirkt wird.

12. Verfahren nach einem der vorangegangenen Ansprüche, **dadurch gekennzeichnet, dass** das chemische Aufschäumen des Gemisches zu dem Grundwerkstoff durch Zugabe von Basen oder Säuren sich unter Aufschäumen zersetzenden Wirkstoffen eingeleitet wird.

13. Verfahren nach einem der vorangegangenen Ansprüche, **dadurch gekennzeichnet, dass** das physikalisch bewirkte Aufschäumen des Gemisches zu dem Grundwerkstoff durch Zugabe von bei einer bestimmten Temperatur Gas zum Aufschäumen abgebenden Wirkstoffen eingeleitet wird.

14. Verfahren nach Anspruch 12 und/oder 13, **dadurch gekennzeichnet, dass** als Wirkstoffe sowohl unter Gasbildung als auch unter Verdampfen des Wassers des Harzes unter Bewirken des Ausschäumens stark exotherm reagierende Phenolharze (PF) eingesetzt werden.

15. Verfahren nach einem der vorangegangenen Ansprüche, **dadurch gekennzeichnet, dass** das zellulose- und/oder lignozellulosehaltiges Material einen Gerüstbildner aufweist.

16. Verfahren nach Anspruch 15, **dadurch gekennzeichnet, dass** als Gerüstbildner ein Fasermaterial zugesetzt wird.

17. Verfahren nach Anspruch 16, **dadurch gekennzeichnet, dass** dem Material das Fasermaterial in einer Menge von 0,1 bis 30, vorzugsweise 1 bis 20 Gew.% zugesetzt wird.

18. Verfahren nach Anspruch 16 oder 17, **dadurch gekennzeichnet, dass** als Fasermaterial Holzfasern zugesetzt werden.

19. Verfahren nach einem der vorangegangenen Ansprüche, **dadurch gekennzeichnet, dass** dem mit dem schaumbildenden Stoff sowie dem Gerüstbildner versehenen Material zusätzlich ein Bindemittel zugesetzt wird.

20. Verfahren nach Anspruch 19, **dadurch gekennzeichnet, dass** das Bindemittel UF-, MUF-, PF-, MUPF-Harze aufweist.

21. Verfahren nach Anspruch 20, **dadurch gekennzeichnet, dass** das Bindemittel dem Gemisch zugesetzt wird.

22. Verfahren nach einem der vorangegangenen Ansprüche, **dadurch gekennzeichnet, dass** das Mischen des Gemischs in einem Extruder zu einem Extrudat erfolgt.

23. Verfahren nach einem der vorangegangenen Ansprüche, **dadurch gekennzeichnet, dass** das Bindemittel dem Gemisch in dem Extruder zugegeben wird.

24. Verfahren nach Anspruch 23, **dadurch gekennzeichnet, dass** das Bindemittel dem Gemisch in dem Extruder fest auf fest zugegeben wird.

25. verfahren nach Anspruch 24, **dadurch gekennzeichnet, dass** das Bindemittel dem Gemisch in dem Extruder fest auf fest über eine Pumpe zugegeben wird.

26. Verfahren nach einem der vorangegangenen Ansprüche, **dadurch gekennzeichnet, dass** in dem Extruder eine Temperatur von 110 bis 180 °C, vorzugsweise 120 bis 160 °C und ein Druck von 7 bis 15 bar, vorzugsweise 8 bis 13 bar herrscht.

27. Verfahren nach einem der vorangegangenen Ansprüche, **dadurch gekennzeichnet, dass** dem Gemisch Wasser zugesetzt worden ist.

28. Zellulose- und/oder lignozellulosehaltiges Material aufweisender Grundwerkstoff, hergestellt nach einem der vorhergehenden Ansprüche, **gekennzeichnet durch** einen schaumbildenden Bestandteil des Grundwerkstoffs und **durch** eine darin zusammen, vorzugsweise mit einem Stoff homogen unter Durchtränkung des Materials verteilt aufgeschäumte und bspw. teilweise **durch** duromere vernetzung ausgehärtete verfestigte Schaumstruktur, wobei der Grundwerkstoff in zerkleinerter, bspw. zerspanter Form vorliegt.

29. Verwendung eines zellulose- und/oder lignozellulosehaltiges Material aufweisenden Grundwerkstoffes hergestellt nach einem der vorhergehenden Verahrensansprüche oder gemäss Anspruch 28, mit einen schaumbildenden Bestandteil des Grundwerkstoffs und mit einer darin zusammen, vorzugsweise mit einem Stoff homogen unter Durchtränkung des Materials verteilt aufgeschäumten und bspw. teilweise durch duromere Vernetzung ausgehärteten verfestigten schaumstruktur für die Weiterverarbeitung zu End- oder Zwischenprodukten wie Holzwerkstoffe, z.B. Span-, Faserplatten und Oriented Strand Boards (OSB).

## Claims

1. A method for manufacturing a base material providing preferably comminuted, cellulose-containing and/or lignocellulose-containing material,
wherein the cellulose-containing and/or lignocellulose-containing material provides a foam-forming component,
wherein the material is mixed intimately at a high-temperature and under positive pressure to form a homogeneous mixture,
wherein the mixture is then foamed under falling pressure and falling temperature with an expansion in volume,
and wherein the foamed mixture finally solidifies to form the base material,
**characterised in that**
- a foam hardener is added to the cellulose-containing and/or lignocellulose-containing material and mixed intimately at high-temperature and under positive pressure to form the mixture,
- that a substance hardening at least partially by duromer cross-linking is used as the foam hardener, and the latter is mixed homogeneously with impregnation of the material to form the mixture,
- that the mixture foamed with an expansion of its volume finally solidifies hardening at least partially by duromer cross-linking to form the base material,
- and that the base material formed after the hardening at least partially by duromer cross-linking is comminuted by granulation.

2. The method according to claim 1,
**characterised in that**
the foam-forming component is formed like maize expanding to form popcorn, rice expanding to form puffed rice, barley; wheat and similar starch-containing cereals and flours made from these materials.

3. The method according to claim 1,
**characterised in that**
the foam hardener provides tannin and/or lignin.

4. The method according to claim 3,
**characterised in that**
comminuted bark is used as the foam hardener providing tannin.

5. The method according to any one of the preceding claims,
**characterised in that**
the material and the substance are continuously mixed to form the mixture and foamed to form the base material under a positive pressure, which is disposed above atmospheric pressure.

6. The method according to any one of the preceding claims,
**characterised in that**
the foam-forming substance hardening at least partially as a duromer provides urea (U), melamine (M), phenol (P), condensation resins and/or PMDI (poly methane diphenyl di isocyanate).

7. The method according to claim 6,
**characterised in that**
tannin resins or lignin-based resins are used as the condensation resins.

8. The method according to any one of the preceding claims,
**characterised in that**
the foam-forming substance provides thermoplastics with additives hardening by duromer cross-linking.

9. The method according to claim 8,
**characterised in that**
acrylates and/or isocyanates are used as additives.

10. The method according to any one of the preceding claims,
**characterised in that**
the foaming of the mixture to form the base material is induced mechanically, physically, thermally, chemically and/or by radiation.

11. The method according to any one of the preceding claims,
**characterised in that**
the mechanical foaming of the mixture to form the base material is induced by mixers, especially shear-force mixers.

12. The method according to any one of the preceding claims,
**characterised in that**
the chemical foaming of the mixture to form the base material is initiated by adding basic or acidic active agents breaking down during foaming.

13. The method according to any one of the preceding claims,
**characterised in that**
the physically induced foaming of the mixture to form the base material is initiated by adding active agents releasing a gas for the foaming at a given temperature.

14. The method according to claim 12 and/or 13,
**characterised in that**
phenol resins (PF) reacting strongly exothermically with a release of gas and also an evaporation of the water of the resin thereby inducing the foaming are used as active agents.

15. The method according to any one of the preceding claims,
**characterised in that**
the cellulose-containing and/or lignocellulose-containing material provides a lattice former.

16. The method according to claim 15,
**characterised in that**
a fibrous material is added as the lattice former.

17. The method according to claim 16,
**characterised in that**
the fibrous material is added to the material in a quantity from 0.1 to 30, preferably 1 to 20% by weight.

18. The method according to any one of claims 16 or 17,
**characterised in that**
wood fibres are used as the fibrous material.

19. The method according to any one of the preceding claims,
**characterised in that**
a binding agent is additionally added to the material provided with the foam-forming substance and the lattice former.

20. The method according to claim 19,
**characterised in that**
the binding agent provides UF, MUF, PF, MUPF resins.

21. The method according to claim 20,
**characterised in that**
the binding agent is added to the mixture.

22. The method according to any one of the preceding claims,
**characterised in that**
the mixing of the mixture is implemented in an extruder to form an extrudate.

23. The method according to any one of the preceding claims,
**characterised in that**
the binding agent is added to the mixture in the extruder.

24. The method according to claim 23,
**characterised in that**
the binding agent is added to the mixture in the extruder solid to solid.

25. The method according to claim 24,
**characterised in that**
the binding agent is added to the mixture in the extruder solid to solid via a pump.

26. The method according to any one of the preceding claims,
**characterised in that**
a temperature from 110 to 180 °C, preferably 120 to 160 °C, and a pressure from 7 to 15 bar, preferably 8 to 13 bar, predominates in the extruder.

27. The method according to any one of the preceding claims,
**characterised in that**
water has been added to the mixture.

28. A base material providing cellulose-containing and/or lignocellulose-containing material, manufactured according to any one of the preceding claims,
**characterised by**
a foam-forming component of the base material and by a foam structure solidified therein, preferably foamed together with a homogeneously distributed substance with impregnation of the material and hardened, for example, partially by duromer cross-linking, wherein the base material is present in comminuted, for example, shredded form.

29. A use of a base material providing cellulose-containing and/or lignocellulose-containing material manufactured according to any one of the preceding method claims or according to claim 28, with a foam-forming component and with a foam structure solidified therein, preferably foamed together with a homogeneously distributed substance with impregnation of the material and hardened, for example, partially by duromer cross-linking for further processing, for example, to form intermediate products, such as timber materials, for example, plywood boards, fibreboards and oriented-strand boards (OSB).

## Revendications

1. Procédé de fabrication d'un matériau de base comportant un matériau, de préférence réduit en morceaux, et contenant de la cellulose et/ou de la lignocellulose, ledit matériau, qui contient de la cellulose et/ou de la lignocellulose, comportant un composant moussant, ledit matériau étant mélangé intimement de manière homogène à température élevée et sous surpression pour obtenir une pâte, ladite pâte étant expansée ensuite, moyennant une augmentation de son volume, sous une baisse de pression et une baisse de température, et ladite pâte expansée se consolidant finalement pour former le matériau de base, **caractérisé**
- **en ce qu'**un durcisseur de mousse est ajouté au matériau contenant de la cellulose et/ou de la lignocellulose, et un brassage intime est effectué à température élevée et sous une surpression pour obtenir la pâte,
- **en ce que** pour le durcisseur de mousse on utilise une matière durcissant au moins partiellement par réticulation d'un matériau thermodurcissable et ladite matière est mélangée de manière homogène à la pâte moyennant une imprégnation du matériau,
- **en ce que**, enfin, la pâte, expansée moyennant une augmentation de son volume et durcie au moins partiellement par réticulation d'un matériau thermodurcissable, est consolidée pour obtenir le matériau de base,
- et **en ce que** le matériau de base, formé après le durcissement au moins partiellement par réticulation d'un matériau thermodurcissable, est concassé par granulation.

2. Procédé selon la revendication 1, **caractérisé en ce que** le composant moussant est réalisé sous forme de maïs - soufflé pour obtenir du pop-corn, de riz - soufflé pour obtenir du riz soufflé -, d'orge, de blé et autres céréales contenant de l'amidon, ainsi que des farines obtenues à partir de ces matériaux.

3. Procédé selon la revendication 1, **caractérisé en ce que** le durcisseur de mousse contient du tanin et/ou de la lignine.

4. Procédé selon la revendication 3, **caractérisé en ce que** l'on utilise de l'écorce broyée pour former le durcisseur de mousse contenant du tanin.

5. Procédé selon l'une quelconque des revendications précédentes, **caractérisé en ce que** le matériau et la matière sont mélangés en continu sous une surpression, qui est supérieure à la pression atmosphérique, pour obtenir la pâte, et sont expansés pour obtenir le matériau de base.

6. Procédé selon l'une quelconque des revendications précédentes, **caractérisé en ce que** la matière moussante, qui durcit au moins partiellement par réticulation d'un matériau thermodurcissable, comporte des résines d'urée (U), des résines de mélamine (M), des résines de phénol (P), des résines de condensation et/ou du PMDI (polyméthane diphényle diisocyanate).

7. Procédé selon la revendication 6, **caractérisé en ce que** pour les résines de condensation on utilise des résines de tanin ou des résines à base de lignine.

8. Procédé selon l'une quelconque des revendications précédentes, **caractérisé en ce que** la matière moussante comporte des matières thermoplastiques avec des additifs durcissant par réticulation du matériau thermodurcissable.

9. Procédé selon la revendication 8, **caractérisé en ce que** les additifs utilisés sont des acrylates et/ou des isocyanates.

10. Procédé selon l'une quelconque des revendications précédentes, **caractérisé en ce que** l'expansion de la pâte pour obtenir le matériau de base est générée par voie mécanique, physique, thermique, chimique et/ou par rayonnement.

11. Procédé selon l'une quelconque des revendications précédentes, **caractérisé en ce que** l'expansion mécanique de la pâte pour obtenir le matériau de base est effectuée au moyen de mélangeurs, en particulier des mélangeurs à forces de cisaillement.

12. Procédé selon l'une quelconque des revendications précédentes, **caractérisé en ce que** l'expansion chimique de la pâte pour obtenir le matériau de base est induite par l'addition de bases ou d'acides à des agents actifs se décomposant sous l'effet de l'expansion.

13. Procédé selon l'une quelconque des revendications précédentes, **caractérisé en ce que** l'expansion par voie physique de la pâte pour obtenir le matériau de base est induite par l'addition d'agents actifs qui, en présence d'une température déterminée, dégagent des gaz pour l'expansion.

14. Procédé selon la revendication 12 et/ou 13, **caractérisé en ce que** pour les agents actifs on utilise des résines phénoliques (PF) réagissant de manière fortement exotherme en induisant l'expansion moyennant la formation de gaz et moyennant l'évaporation de l'eau de la résine.

15. Procédé selon l'une quelconque des revendications précédentes, **caractérisé en ce que** le matériau contenant de la cellulose et/ou de la lignocellulose comporte un générateur de structure.

16. Procédé selon la revendication 15, **caractérisé en ce que** le générateur de structure utilisé est un matériau à fibres.

17. Procédé selon la revendication 16, **caractérisé en ce que** le matériau à fibres est ajouté au matériau dans une quantité de 0,1 à 30 % en poids, de préférence de 1 à 20 % en poids.

18. Procédé selon la revendication 16 ou 17, **caractérisé en ce que** des fibres de bois sont ajoutées en tant que matériau à fibres.

19. Procédé selon l'une quelconque des revendications précédentes, **caractérisé en ce qu'**on ajoute un liant au matériau contenant la matière moussante et le générateur de structure.

20. Procédé selon la revendication 19, **caractérisé en ce que** le liant comporte des résines UF, MUF, PF et MUPF.

21. Procédé selon la revendication 20, **caractérisé en ce que** le liant est ajouté à la pâte.

22. Procédé selon l'une quelconque des revendications précédentes, **caractérisé en ce que** le mélange de la pâte est effectué dans une extrudeuse pour obtenir un produit extrudé.

23. Procédé selon l'une quelconque des revendications précédentes, **caractérisé en ce que** le liant est ajouté à la pâte dans l'extrudeuse.

24. Procédé selon la revendication 23, **caractérisé en ce que** le liant est ajouté à la pâte solide sur solide dans l'extrudeuse.

25. Procédé selon la revendication 24, **caractérisé en ce que** le liant est ajouté à la pâte solide sur solide dans l'extrudeuse au moyen d'une pompe.

26. Procédé selon l'une quelconque des revendications précédentes, **caractérisé en ce que** dans l'extrudeuse règnent une température de 110 à 180 °C, de préférence de 120 à 160 °C et une pression de 7 à 15 bar, de préférence de 8 à 13 bar.

27. Procédé selon l'une quelconque des revendications précédentes, **caractérisé en ce que** de l'eau est ajoutée à la pâte.

28. Matériau de base, comportant un matériau contenant de la cellulose et/ou de la lignocellulose, fabriqué selon l'une quelconque des revendications précédentes, **caractérisé par** un composant moussant du matériau de base et par une structure moussante expansée, répartie dans celui-ci conjointement avec, de préférence, une matière, de manière homogène moyennant une imprégnation du matériau, et, par exemple, consolidée en étant durcie par réticulation du matériau thermodurcissable, le matériau de base étant disponible sous forme réduite en morceaux, par exemple sous forme de copeaux.

29. Utilisation d'un matériau de base, comportant un matériau contenant de la cellulose et/ou de la lignocellulose, fabriqué selon l'une quelconque des revendications précédentes portant sur le procédé ou selon la revendication 28, comportant une structure moussante expansée, répartie dans celui-ci conjointement avec, de préférence, une matière, de manière homogène moyennant une imprégnation du matériau, et, par exemple, consolidée en étant durcie par réticulation du matériau thermodurcissable, en vue du traitement ultérieur pour réaliser des produits finis ou des demi-produits, tels que des matériaux à base de bois, tels que des panneaux de copeaux, des panneaux de fibres et des panneaux à lamelles orientées (panneaux OSB).
